# EUROPÄISCHE PATENTSCHRIFT

(11) **EP 2 037 156 B1**
(45) Veröffentlichungstag und Bekanntmachung des Hinweises auf die Patenterteilung: **18.04.2012**
(21) Anmeldenummer: 08163727.4
(22) Anmeldetag: 05.09.2008
(51) Int. Cl.: F16H 57/08, F16H 63/30

(54) **Planetensatz mit einem Hohlradlager, einem Planetenträger und einem Holrad**
Planetary gear set with a hollow wheel bearing, a planet carrier and a hollow wheel
Train planétaire avec un palier de roue creuse, un porte planète et une roue creuse

(30) Priorität: 13.09.2007 DE 102007043781
(43) Veröffentlichungstag der Anmeldung: 18.03.2009
(73) Patentinhaber: ZF Friedrichshafen AG, 88046 Friedrichshafen (DE)
(72) Erfinder: Aberson, Peter, 88131 Lindau (DE)

(56) Entgegenhaltungen:
- EP-A2- 1 429 054
- FR-A1- 2 363 739

## Beschreibung

Die vorliegende Erfindung bezieht sich auf ein Planetensatzes gemäß dem Oberbegriff des Patentanspruchs 1.

Die DE 103 60 693 A1 offenbart ein Planetengetriebe, welches ein Hohlrad aufweist, dessen radiale äußere Umfangsfläche eine Lagerfläche eines Gleitlagers bildet. Die DE 103 60 693 A1 offenbart alle Merkmale des Oberbegriffs des Anspruchs 1.

Aus dem Stand der Technik ist weiterhin bekannt, bei Automatgetrieben, insbesondere bei stufenlosen Getrieben, auch bei Hybridfahrzeugen, das Hohlrad des in der Regel als Wendegetriebe dienenden eingebauten Planetensatzes radial in einer Gleitlagerbuchse zu lagern. Diese zusätzliche Radiallagerung ist vorgesehen, da die Zentrierung des Hohlrades nur auf die drei Planetenräder des Planetensatzes zu unakzeptablen Geräuschen führen würde, die hauptsächlich durch die Radialbewegungen des Hohlrades und große Änderungen der Flankenspiele bei jeder Umdrehung des Planetenträgers verursacht würden. Hierbei kann je nach Ausführung eine separate Axialanlaufscheibe vorgesehen sein oder die Funktion einer separaten Axialanlaufscheibe kann in die Lagerbuchse integriert sein.

Die Lagerbuchse der bekannten Hohlradlagerung ist in eine mit sehr geringer Toleranz genau zu bearbeitende Bohrung des Planetenträgers eingepresst, sodass der Lagerspalt nach dem Einpressen in die Bohrung noch einen akzeptablen Wert und eine akzeptable Zentrierung hat und die Lagerbuchse gegen Verdrehen gesichert wird.

Der Gleitlagerspalttoleranz wird hierbei durch die Summe der Bohrungstoleranz, der Wandstärke der Buchse und des Hohlradaußendurchmessers bestimmt.

Der vorliegenden Erfindung liegt die Aufgabe zugrunde, ein als Gleitlager ausgeführtes Hohlradlager für das Hohlrad eines Planetensatzes anzugeben, bei der die Bohrung der Lagerbuchse nicht mehr so genau bearbeitet werden muss.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein als Gleitlager ausgeführtes Hohlradlager vorgeschlagen, wobei das Hohlrad in einer in eine Bohrung des Planetenträgers des Planetensatzes eingepressten Lagerbuchse des Hohlradlagers radial gelagert ist, bei dem die Funktionen Radiallagerung, Zentrierung und Verdrehsicherung voneinander getrennt und unabhängig realisierbar sind und welches eine Axiallagerfläche aufweist.

Durch die erfindungsgemäße Konzeption muss die Bohrung, in die die Lagerbuchse gepresst wird, nicht so genau bearbeitet werden, wie es aus dem Stand der Technik bekannt ist; es ist sogar möglich, eine gesinterte Bohrung zu verwenden. Die Gleitlagerspalttoleranz wird in vorteilhafter Weise kleiner, da durch die Trennung von Radiallager- und Zentrierfunktion die Berücksichtigung der Wandstärke der Lagerbuchse zur Bestimmung der Gleitlagerspalttoleranzkette entfällt.

Gemäß der Erfindung erfolgt die Trennung der Funktionen Radiallagerung, Zentrierung und Verdrehsicherung dadurch, dass das als Gleitlager ausgebildete Hohlradlager separate Radiallagerbögen, Zentrierlaschen und Verdrehsicherungslaschen aufweist.

Durch die Trennung von Radiallager- und Zentrierfunktion ist, wie bereits erläutert, die Wandstärke der Lagerbuchse aus der Gleitlagerspalttoleranzkette verschwunden, wodurch die Hohlradzentrierung genauer wird. Zudem kann die Bohrung im Planetenträger größere Toleranzen aufweisen, da die Zentrierlaschen keinen Einfluss auf den Radiallagerdurchmesser haben.

Die Erfindung wird im folgenden anhand der beigefügten Figuren beispielhaft näher erläutert. Es zeigen:
- Figur 1:: Eine schematische Schnittansicht einer Hohlradlagerung nach dem Stand der Technik;
- Figur 2:: Eine schematische Schnittansicht einer Hohlradlagerung im montierten Zustand gemäß der vorliegenden Erfindung;
- Figur 3:: Eine schematische Draufsicht eines gemäß der Erfindung ausgebildeten Gleitlagers im montierten Zustand, wobei das Hohlrad nicht gezeigt wird;
- Figur 4:: Eine schematische Draufsicht und eine Seitenansicht eines erfindungsgemäß ausgebildeten Gleitlagers; und
- Figur 5:: Eine perspektivische Ansicht eines erfindungsgemäßen Gleitlagers und des Planetenträgers, in dessen Bohrung das Gleitlager eingebaut wird.

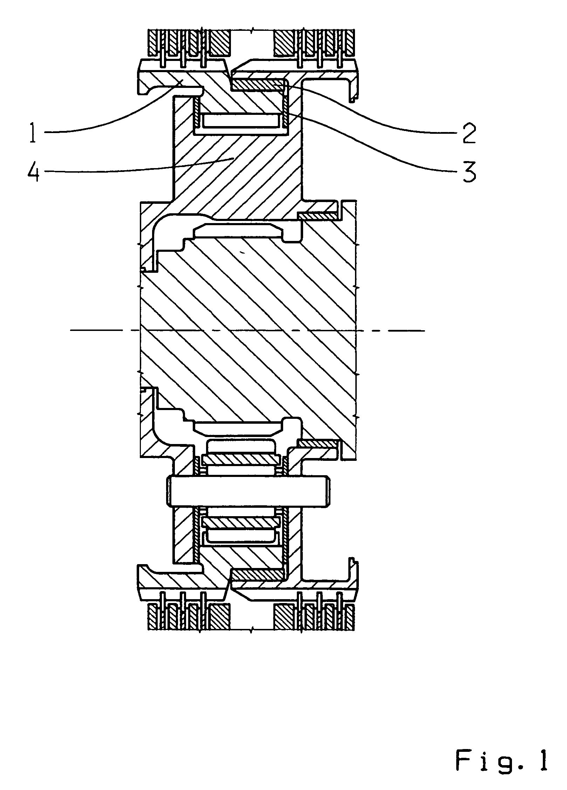

In Figur 1 ist ein Hohlrad 1 eines Planetensatzes gezeigt, welches in einer Buchse eines Gleitlagers 2 radial gelagert ist. Bei dem gezeigten Beispiel ist eine separate Axialanlaufscheibe 3 vorgesehen, die der Axiallagerung dient. Wie in Figur 1 gezeigt, ist die Buchse des Gleitlagers 2 in eine Bohrung im Planetenträger 4 eingepresst, wobei die Bohrung mit sehr geringer Toleranz zu bearbeiten ist, damit der Lagerspalt nach dem Einpressen in die Bohrung noch einen akzeptablen Wert und eine akzeptable Zentrierung hat und das Gleitlager 2 gegen Verdrehen gesichert ist. Bei dieser Konstruktion wird die Gleitlagerspalttoleranz durch die Summe der Bohrungstoleranz, der Wandstärke der Buchse und des Hohlradaußendurchmessers bestimmt.

Um die Anforderungen an die Toleranz der Bohrung des Planetenträgers 4 zur Aufnahme des Gleitlagers 2 zu reduzieren, wird erfindungsgemäß ein als Gleitlager ausgeführtes Hohlradlager vorgeschlagen, bei dem die Funktionen Radiallagerung, Zentrierung und Verdrehsicherung getrennt werden und voneinander unabhängig realisierbar sind, wobei das Gleitlager auch eine Axiallagerfunktion aufweist.

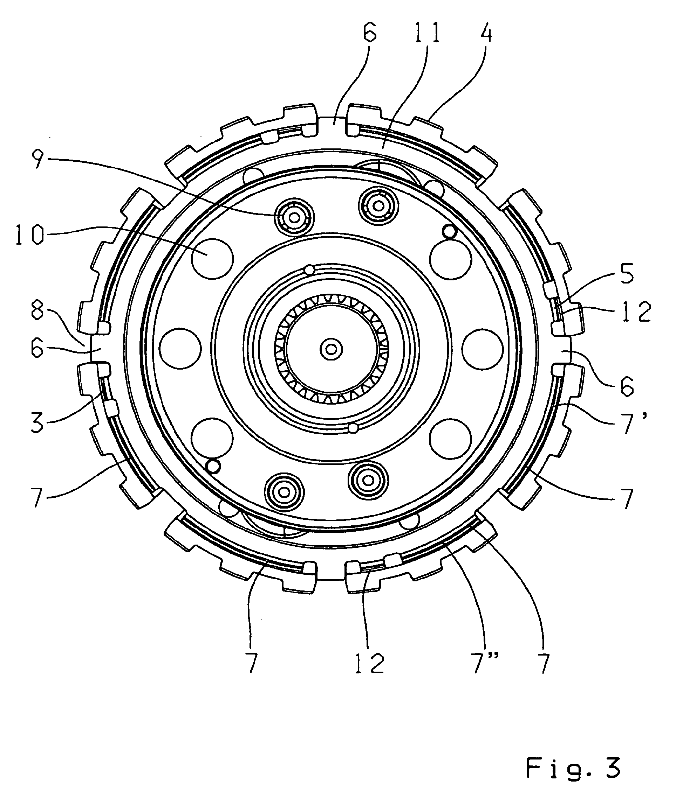

Die Trennung dieser Funktionen erfolgt vorzugsweise dadurch, dass das Gleitlager separate Radiallagerbögen 7, Zentrierlaschen 5 und Verdrehsicherungslaschen 6 sowie eine Axiallagerfläche bzw. eine Axialanlaufscheibe 11 aufweist, wie anhand Figuren 3, 4 und 5 veranschaulicht.

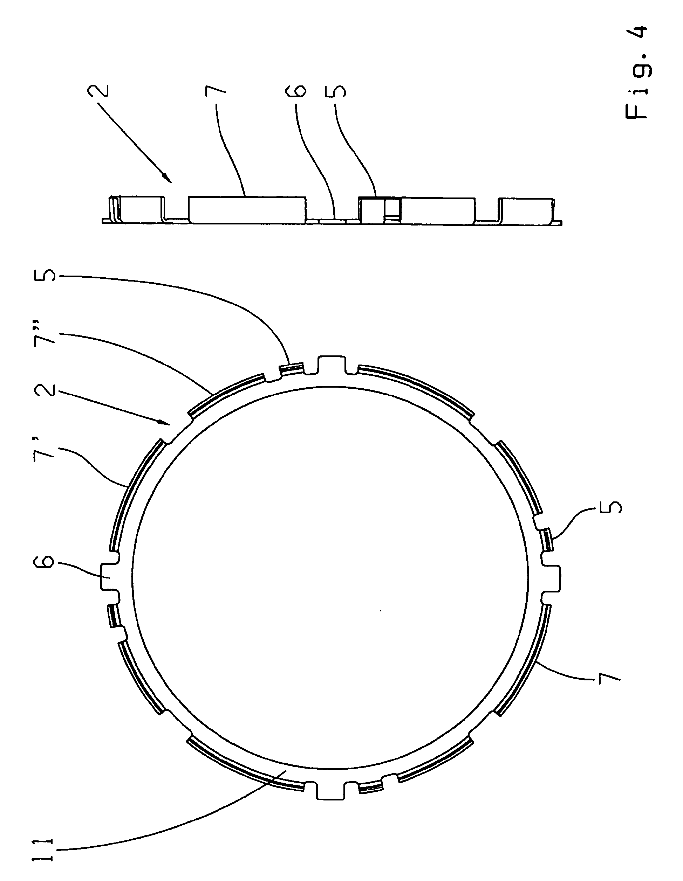

In Figur 4 ist eine Draufsicht und eine Seitenansicht einer erfindungsgemäß ausgebildeten Hohlradlagerung gezeigt; hierbei weist das Gleitlager 2 Zentrierlaschen 5, Verdrehsicherungslaschen 6 sowie Radiallagerbögen 7 auf. Vorzugsweise sind die Radiallagerbögen 7 jeweils in zwei Teile 7', 7" aufgeteilt, um biegetechnischen Beschränkungen Rechnung zu tragen. Bei dem in Figuren 3, 4 und 5 gezeigten Ausführungsbeispiel weist das Gleitlager vier Verdrehsicherungslaschen 6, die in einem Winkelabstand von 90° zueinander angeordnet sind.

Im montierten Zustand in der Bohrung des Planetenträgers 4, sind, wie in Figur 3 gezeigt, die Verdrehsicherungslaschen 6 in entsprechende Aufnahmen 8 des Planetenträgers 4 angeordnet, wobei die Zentrierlaschen 5 unabhängig von den Verdrehsicherungslaschen 6 für die Zentrierung in der Bohrung des Planetenträgers 4 sorgen. Zur Aufnahme der Zentrierlaschen 5 ist der Planetenträger 4 derart ausgebildet, dass Aufnahmen 12 für die Laschen 5 entstehen. Vorzugsweise wird der Planetenträger 4 durch Sintern hergestellt. Des weiteren sind in Figur 3 sind die Planetenbolzen mit 9 und Beölungsbohrungen mit 10 bezeichnet.

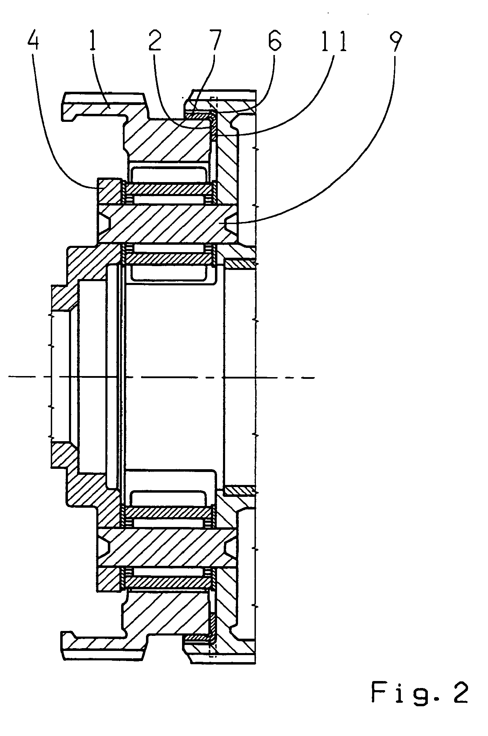

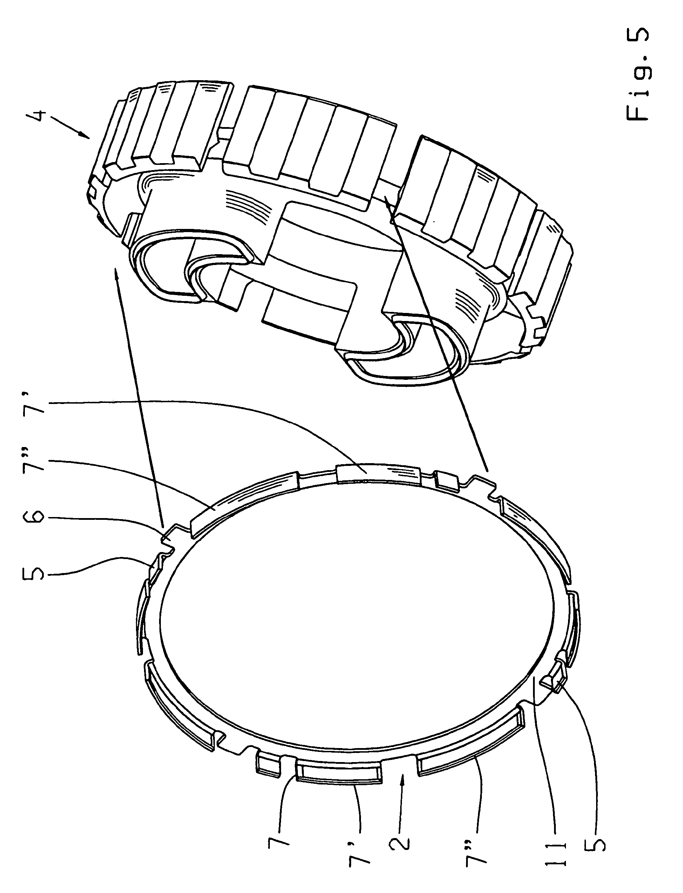

In der perspektivischen Darstellung gemäß Figur 5 wird die Montagerichtung des Gleitlagers 2 durch die Pfeile veranschaulicht, wobei Gegenstand der Figur 2 eine schematische Schnittansicht einer erfindungsgemäßen Hohlradlagerung im montierten Zustand ist; in dieser Figur sind die Axiallagerfläche 11, eine Verdrehsicherungslasche 6 sowie ein Radiallagerbogen 7 des erfindungsgemäßen Gleitlagers 2 dargestellt.

Durch die erfindungsgemäße Konzeption der Trennung von Radiallager- und Zentrierfunktion spielt die Wandstärke der Lagerbuchse 2 bezüglich der Gleitlagerspalttoleranzkette keine Rolle, wodurch die Hohlradzentrierung genauer wird. In vorteilhafter Weise kann die Bohrung im Planetenträger 4 zur Aufnahme der Lagerbuchse 2 größere Toleranzen aufweisen, da die Zentrierlaschen 5 keinen Einfluss auf den Radiallagerdurchmesser haben.

### Bezugszeichen

- 1: Hohlrad
- 2: Gleitlagerbuchse
- 3: Axialanlaufscheibe
- 4: Planetenträger
- 5: Zentrierlasche
- 6: Verdrehsicherungslasche
- 7: Radiallagerbogen
- 8: Aufnahme
- 9: Planetenbolzen
- 10: Beölungsbohrung
- 11: Axiallagerfläche
- 12: Aufnahme

## Patentansprüche

1. Ein Planetensatz mit einem Hohlradlager (2), welches als Gleitlager ausgeführt ist, einem Planetenträger (4) und einem Holhrad (1), , wobei das Hohlrad (1) in einer in eine Bohrung des Planetenträgers (4) des Planetensatzes eingepressten Lagerbuchse des Hohlradlagers (2) radial gelagert ist, **dadurch gekennzeichnet, dass** das Hohlradlager (2) separate Radiallagerbögen (7), Zentrierlaschen (5) und Verdrehsicherungslaschen (6) sowie eine Axiallagerfläche (11) aufweist.

2. Eines Planetensatz, nach Anspruch 1, **dadurch gekennzeichnet, dass** das Hohlradlager vier Verdrehsicherungslaschen (6) aufweist, die in einem Winkelabstand von 90° zueinander angeordnet sind.

3. Ein Planetensatz, nach Anspruch 1 oder 2, **dadurch gekennzeichnet, dass** der Planetenträger (4) des Planetensatzes derart ausgebildet ist, dass er zur Aufnahme der Zentrierlaschen (5) und Verdrehsicherungslaschen (6) Aufnahmen (12, 8) aufweist.

## Claims

1. A planetary gear set having an internal gear bearing (2) designed as a plain bearing, having a planet carrier (4) and having an internal gear (1), wherein the internal gear (1) is mounted radially in a bearing bush, which is pressed into a bore of the planet carrier (4) of the planetary gear set, of the internal gear bearing (2), **characterized in that** the internal gear bearing (2) has separate radial bearing bent portions (7), centring lugs (5) and twist prevention lugs (6) and also an axial bearing surface (11).

2. A planetary gear set according to Claim 1, **characterized in that** the internal gear bearing has four twist prevention lugs (6) which are arranged at angular intervals of 90° with respect to one another.

3. A planetary gear set according to Claim 1 or 2, **characterized in that** the planet carrier (4) of the planetary gear set is designed so as to have receptacles (12, 8) for receiving the centring lugs (5) and twist prevention lugs (6).

## Revendications

1. Train planétaire comprenant un palier de couronne (2) qui est réalisé sous forme de palier lisse, un porte-satellites (4) et une couronne (1), la couronne (1) étant montée radialement dans un coussinet du palier de couronne (2) qui est enfoncé dans un alésage du porte-satellites (4) du train planétaire, **caractérisé en ce que** le palier de couronne (2) comprend des coudes de palier radiaux (7), des pattes de centrage (5) et des pattes de fixation antirotation (6) séparés ainsi qu'une surface de palier axiale (11).

2. Train planétaire selon la revendication 1, **caractérisé en ce que** le palier de couronne comprend quatre pattes de fixation antirotation (6) qui sont disposées à une distance angulaire de 90° les unes par rapport aux autres.

3. Train planétaire selon la revendication 1 ou 2, **caractérisé en ce que** le porte-satellites (4) du train planétaire est réalisé de telle sorte qu'il comprenne des logements (12, 8) destinés à recevoir les pattes de centrage (5) et les pattes de fixation antirotation (6).
